# EUROPÄISCHE PATENTSCHRIFT

(11) **EP 2 313 953 B1**
(45) Veröffentlichungstag und Bekanntmachung des Hinweises auf die Patenterteilung: **18.05.2016**
(21) Anmeldenummer: 09781120.2
(22) Anmeldetag: 27.07.2009
(51) Int. Cl.: H01R 24/70, H01R 13/652, H02H 3/33, G01R 19/20

(54) **FEHLERSTROMERFASSUNGSGERÄT**
FAULT-CURRENT DETECTION DEVICE
APPAREIL DE DÉTECTION DE COURANT DE FUITE

(30) Priorität: 14.08.2008 DE 102008037830
(43) Veröffentlichungstag der Anmeldung: 27.04.2011
(73) Patentinhaber: Siemens Aktiengesellschaft, 80333 München (DE)
(72) Erfinder: HUEBER, Alexander, 84085 Niederleierndorf (DE); SPORRER, Thomas, 95478 Kemnath (DE)
(86) Internationale Anmeldenummer: PCT/EP2009/059657
(87) Internationale Veröffentlichungsnummer: WO 2010/018057

(56) Entgegenhaltungen:
- EP-A- 0 440 835
- US-A- 4 001 697
- US-A- 5 309 311

## Beschreibung

Die Erfindung betrifft ein Fehlerstromerfassungsgerät.

Eine Erfassung von Fehlerströmen kann aus vielfältigen Gründen erwünscht sein. Klassischerweise ist ein Fehlerstromerfassungsgerät als Fehlerstromschutzschalter ausgebildet, durch den der Stromfluss im Falle des Erfassens eines aufgetretenen Fehlerstroms mit einer vorbestimmten Mindeststromstärke unterbrochen werden kann. In einer Ausführungsform als so genannter Differenzstromschutzschalter ist ein Fehlerstromerfassungsgerät nach dem Oberbegriff von Patentanspruch 1 aus der EP 0 167 079 A1 bekannt.

Das Fehlerstromerfassungsgerät wird in ein Netz hinein geschaltet derart, dass ein über das Netz fließender Strom auch über das Fehlerstromerfassungsgerät fließt. Hierzu weist das Fehlerstromerfassungsgerät eine Mehrzahl von Anschlusspaaren auf, wobei an den Anschlüssen Netzleitungen angeschlossen werden können. Die Anschlüsse eines Paares sind jeweils über einen Primärleiter miteinander verbunden, so dass das Netz über eine an einem Anschluss des Paares angeschlossene Netzleitung, den Primärleiter und dann über die an dem anderen Anschluss desselben Paares angeschlossene Netzleitungen verläuft. Die Fehlerströme werden vorliegend aufgrund eines Induktionsprinzips erfasst. Hierzu durchlaufen die Primärleiter eine Primärseite eines Summenstromwandlers, wobei sie im Bereich des Summenstromwandlers typischerweise als Primärwicklungen bereitgestellt sind. An einer Sekundärseite des Summenstromwandlers ist eine Sekundärwicklung bereitgestellt. Mit einem ersten Ende ist diese über eine Impedanz mit einem Massenanschluss gekoppelt, mit einem zweiten Ende mit einem Rechteckgenerator. An dem nicht-massenanschlussseitigen Ende der Impedanz, das mit dem ersten Ende der Sekundärwicklung zusammenfallen kann, ist ein Potenzialabgriff bereitgestellt, der mit einer Auswerteeinrichtung gekoppelt ist.

Die Primärwicklungen sind so gewickelt, dass bei einem Stromfluss durch die Netzleitungen und damit über die Primärleiter, bei dem kein Fehlerstrom auftritt, der über einen Primärleiter fließende Strom in der zugehörigen Primärwicklung ein Magnetfeld erzeugt, das durch von demselben Strom, der über den anderen Primärleiter in Gegenrichtung zurückfließt, erzeugte Magnetfeld genau ausgleicht. Ist ein Fehlerstrom ein Wechselstrom, wird in der Sekundärwicklung eine Spannung generiert, die sich von der Auswerteeinrichtung erfassen lässt. Damit auch Fehlerströme, die Gleichströme oder gepulste Ströme sind, erfasst werden können, erzeugt der Rechteckgenerator ständig eine Rechteckespannung mit einer Frequenz, die zumindest das fünffache und bevorzugt zumindest das zwanzigfache der Netzfrequenz ist, bei 50 Hz z. B. 3 kHz beträgt. Durch den Rechteckgenerator wird so ständig eine Spannung in der Sekundärwicklung induziert. Ein Fehlerstrom, der ein Gleichstrom oder ein gepulster Strom ist, bewirkt über ein von ihm ausgehendes Magnetfeld, typischerweise vermittelt über einen Magnetkern des Summenstromwandlers, eine Änderung der Induktivität der Sekundärwicklung. Erfasst man die aufgrund der Rechteckpulse generierte Spannung in der Auswerteeinrichtung, lässt sich diese Änderung der Induktivität detektieren und damit auch ein Fehlerstrom, der ein Gleichstrom ist.

Die Auswerteeinrichtung sollte in der Lage sein, Fehlerströme, seien dies Gleichströme oder Wechselströme, über einen großen Bereich von Stromstärken, anhand des am Potenzialabgriff anliegenden Potenzials zu erkennen.

In der DE 36 42 393 A1 ist ein Beispiel für eine solche Auswerteeinrichtung, die als Auswerteschaltung bereitgestellt ist, offenbart.

Die Druckschrift EP 0 440 835 A1 offenbart eine Einrichtung zum Bereitstellen von symmetrischen Signalkurven, insbesondere aus Frequenzgeneratoren. Diese Einrichtung wird insbesondere dafür verwendet, um bei einem oben beschriebenen Fehlerstromerfassungsgerät die Sekundarwicklung mittels eines Rechtecksignals zu versorgen, welches hinsichtlich der Nulldurchgänge und hinsichtlich der Amplituden zur Nulllinie symmetrisch ist. Somit kann ein gleiches Auslöseverhalten des Fehlerstromerfassungsgerät für positive und negative Fehlerströme sowie für Fehlerströme unterschiedlicher Amplituden erreicht werden.

Es ist Aufgabe der Erfindung, ein Fehlerstromerfassungsgerät nach dem Oberbegriff von Patentanspruch 1 dahingehend zu verbessern, dass es über einen großen Bereich von Stromstärken Fehlerströme erfasst.

Die Aufgabe wird durch ein Fehlerstromerfassungsgerät gemäß Patentanspruch 1 gelöst.

Das Fehlerstromerfassungsgerät ist erfindungsgemäß allstromsensitiv, erfasst also sowohl Fehlerströme, die Wechselströme sind, als auch Fehlerströme, die Gleichströme oder gepulste Ströme sind. Hierbei erweist es sich als vorteilhaft, wenn gesonderte Auswerteäste für diese beiden Arten von Fehlerströmen bereitgestellt sind. Hierzu sind bevorzugt ein erster mit dem Potenzialabgriff gekoppelter Auswerteast, der zum Aufbereiten von am Potenzialabgriff anliegenden Signalen für eine Wechselfehlerstromanalyse dient, und ein zweiter Auswerteast, der zum Aufbereiten von am Potenzialabgriff anliegenden Signalen für eine Gleichfehlerstromanalyse dient, bereitgestellt, und in jedem dieser Äste ist ein Verstärker vorgesehen, dessen Verstärkungsfaktor einstellbar ist.

Somit umfasst die Auswerteeinrichtung einen Verstärker, dessen Verstärkungsfaktor (z. B. über ein Bedienelement, möglicherweise aber auch durch Übermittlung digitaler Daten) einstellbar ist.

Durch das Verwenden eines Verstärkers kann die Signalaufbereitung grundsätzlich auf eine vorbestimmte Weise erfolgen, und zwar sowohl vor dem Verstärker als auch nach dem Verstärker. Es muss daher bei der Ausgestaltung der von dem Verstärker verschiedenen Einheiten der Auswerteeinrichtung auf eine gewünschte Empfindlichkeit des Fehlerstromerfassungsgeräts nicht Rücksicht genommen werden. Soll die Empfindlichkeit erhöht werden, muss lediglich der Verstärkungsfaktor vergrößert werden. Die dem Verstärker nachgeordneten Elemente der Auswerteeinrichtung können grundsätzlich immer gleich arbeiten, z. B. wenn sie am Eingang Spannungssignale aus einem vorbestimmten Intervall zu empfangen ausgelegt sind. Dies ist z. B. der Fall, wenn Mikroprozessoren und andere elektronische Datenverarbeitungseinheiten verwendet werden.

Der Verstärker kann als eigenes Bauelement vorgesehen sein. Zur Aufbereitung der am Potenzialabgriff bereitstehenden Signale hat sich jedoch eine Gleichrichtung als vorteilhaft erwiesen. Der Verstärker kann in eine hierzu bereitgestellte Gleichrichtereinheit integriert sein, es können also insbesondere in einem Schritt Gleichrichtung und Verstärkung gleichzeitig erfolgen.

Die beiden Auswerteäste können im Folgenden völlig voneinander getrennt sein, sie können jedoch auch wieder zusammengeführt werden, insbesondere in einer gemeinsamen Auswerteeinheit, die zum Auswerten der durch die jeweiligen Äste bereitgestellten aufbereiteten Signale dient. Eine solche Auswerteeinheit ist vorzugsweise digital und ist zum Zwecke der Kupplung mit dem ersten und dem zweiten Auswerteast mit zwei Eingängen versehen. Durch die Verwendung einer gemeinsamen Auswerteeinheit können Synergieeffekte bewirkt werden. In einer digitalen Auswerteeinheit ist es möglich, dass zwei Softwaremodule verwendet werden, die gesondert die an den Eingängen zugeführten aufbereiteten Signale analysieren. Die Synergieeffekte können jedoch sogar soweit gehen, dass ein einziges Computerprogramm zur Auswertung der über die beiden Äste zugeführten Signale gleichzeitig dient. Synergieeffekte können sich insbesondere auch ergeben, wenn das Fehlerstromerfassungsgerät ein Fehlerstromschutzschalter ist. Dann ist es ohnehin Aufgabe der Auswerteeinheit, die zugeführten Signale nach einem oder mehreren vorbestimmten Kriterien darauf hin zu analysieren, ob der Fehlerstromschutzschalter auslösen soll. Wird eine gemeinsame Auswerteeinheit für die beiden Auswerteäste vorgesehen, gibt es eine einzige Zentrale, die Befehle zum Auslösen des Fehlerstromschutzschalters an eine Auslöseeinheit geben kann, die wiederum auf ein Schaltschloss einwirkt, das in den Primärleitern zwischen den Anschlusspaaren für Netzleitungen vorgesehene Schalter öffnet.

Zur Analyse auf Fehlerströme, die Wechselströme sind, weist der erste Auswerteast bevorzugt einen Bandpassfilter auf, der Signale um eine vorbestimmte Netzfrequenz, nämlich insbesondere des Netzes, an das das Fehlerstromerfassungsgerät angeschlossen werden soll (Europa: 50 Hz, USA: 60 Hz) durchlässt. Hierbei ist davon ausgegangen, dass Fehlerströme, welche Wechselströme sind, durch die Netzspannung erzeugt werden und daher dieselbe Frequenz haben. Dem Bandpassfilter ist in dem ersten Auswerteast dann ein Gleichrichter und Verstärker nachgeordnet, insbesondere eine Gleichrichtereinheit, die Gleichrichter- und Verstärkerfunktionen zugleich aufweist, und es handelt sich hierbei um denjenigen Verstärker, dessen Verstärkungsfaktor einstellbar ist. Die Gleichrichtung ist vorteilhaft, weil lediglich der Betrag der Fehlerstromstärke insbesondere hinsichtlich eines Schwellwertkriteriums untersucht werden muss und nicht gesondert im positiven und im negativen Zweig eine Schwingung erfasst werden muss.

Bevorzugt weist der zweite Auswerteast einen Hochpassfilter auf. Dieser soll Signale mit einer Frequenz, die einer von dem Rechteckgenerator erzeugbaren Frequenz gleich ist, durchlassen. Da der zweite Auswerteast Fehlerströme erfassen soll, die Gleichströme sind, ist dies anhand der durch den Rechteckgenerator erzeugten Spannung erkennbar. Daher sollte die Frequenz, die der Rechteckgenerator tatsächlich abgibt, von dem Hochpassfilter durchgelassen werden. Der Hochpassfilter kann zu diesem Zweck so eingestellt sein, dass er alle Frequenzen aus dem für den Rechteckgenerator möglichen Frequenzbereich durchlässt. Gegebenenfalls ist der Rechteckgenerator, wenn er kostengünstig ausgebildet ist, ohnehin nur zur Abgabe von Rechteckpulsen mit einer feststehenden Frequenz in der Lage. Sollte der Bereich von Frequenzen, über die der Rechteckgenerator Rechteckpulse abgeben kann, für den Hochpassfilter zu groß sein, kann dieser auch nur Signale aus einem demgegenüber etwas eingeschränkten Frequenzbereich durchlassen. Auch bei der Analyse nach Fehlerströmen, welche Gleichströme sind, erweist sich eine Gleichrichtung als sinnvoll, so dass auch hier dem Hochpassfilter ein Gleichrichter und Verstärker, gegebenenfalls als Teil einer Gleichrichtereinheit mit Gleichrichter- und Verstärkerfunktion in einem, nachgeordnet ist, wobei es sich um denjenigen Verstärker handelt, dessen Verstärkungsfaktor einstellbar ist. Da der Hochpass möglicherweise noch Signale mit der Netzfrequenz durchlässt, ist bevorzugt außerdem dem Gleichrichter und Verstärker ein Tiefpass nachgeordnet, der Signale mit der vorbestimmten Netzfrequenz, nämlich eben des Netzes, an den das Fehlerstromerfassungsgerät angeschlossen werden soll (Europa: 50 Hz, USA: 60 Hz) herausfiltert.

In den beiden Auswerteästen kann vorgesehen sein, dass die Filtereinstellungen variabel sind, also die Mittenfrequenz des Bandpassfilters im ersten Auswerteast verstellbar ist und/oder die Grenzfrequenz des Hochpassfilters im zweiten Auswerteast und/oder die Grenzfrequenz des Tiefpassfilters im zweiten Auswerteast variabel ist.

Besonders komfortabel ist die Bedienung eines Fehlerstromerfassungsgeräts gemäß der Erfindung mit zwei Auswerteästen, wenn ein Bedienelement vorgesehen ist, über das der Verstärkungsfaktor der Verstärker in beiden Ästen einstellbar ist. Das Bedienelement kann beispielsweise ein einfacher Drehschalter sein, wobei bei verschiedenen Einstellungen des Bedienelements nämlich z. B. des Drehschalters, in Einheiten des Gleichrichters und Verstärkers in jedem Auswerteast unterschiedliche Widerstände geschaltet werden, wobei sich diese Widerstände bei den beiden Auswerteästen unterscheiden können, auch wenn sie über ein und dasselbe Bedienelement festgelegt werden.

Wie bereits eingangs erläutert, ist eine Fehlerstromerfassung insbesondere sinnvoll bei einem Fehlerstromschutzschalter, bei dem zumindest ein Primärleiter durch einen Schalter unterbrechbar ist. Die Auswerteeinrichtung analysiert am Potenzialabgriff anliegende Signale und bewirkt bei einem vorbestimmten Analyseergebnis ein Unterbrechen jedes Schalters in einem Primärleiter. Das Untersuchen der eingehenden Signale nach einem vorbestimmten Kriterium kann insbesondere durch eine dem Verstärker im Signalpfad nachgeordnete Auswerteeinheit erfolgen, die wie oben dargelegt zwei Auswerteästen gemeinsam sein kann. Es kann dann von der Auswerteeinheit stets ein und derselbe Schwellwert als Auslösekriterium verwendet werden, wobei eine Änderung des Verstärkungsfaktors bewirkt, dass sich bei Verwendung desselben Schwellwerts die Empfindlichkeit ändert: Wird die Verstärkung klein, löst der Fehlerstromschutzschalter bei relativ hohen Fehlerströmen (Fehlerströmen mit hoher Stromstärke) aus, ist die Verstärkung größer, löst der Fehlerstromschutzschalter schon bei kleineren Fehlerströmen (Fehlerströmen mit kleinerer Stromstärke) aus.

Nachfolgend wird eine bevorzugte Ausführungsform der Erfindung unter Bezug auf die Zeichnung beschrieben, wobei
- FIG 1: schematisch den Aufbau eines Fehlerstromschutzschalters veranschaulicht, bei dem die Erfindung eingesetzt wird und
- FIG 2: in schematischer Darstellung eine Auswerteeinrichtung zeigt, die erfindungsgemäß bei dem Fehlerstromschutzschalter aus FIG 1 eingesetzt wird.

Ein im Ganzen mit 10 bezeichneter Fehlerstromschutzschalter weist ein erstes Anschlusspaar 12a, 12b und zweites Anschlusspaar 14a, 14b auf, die zum Anschließen des Fehlerstromschutzschalters 10 an Netzleitungen dienen. Die beiden Anschlüsse eines Paares sind über einen Primärleiter jeweils miteinander verbunden, nämlich die Anschlüsse 12a und 12b über einen Primärleiter 16 und die Anschlüsse 14a und 14b über einen Primärleiter 18. Im Primärleiter 16 ist ein Schalter 20 vorgesehen, und im Primärleiter 18 ein Schalter 22, über den die jeweilige Verbindung zwischen den jeweiligen Anschlüssen 12a und 12b bzw. 14a und 14b unterbrochen werden kann. Die Schalter 20 und 22 werden vermittels eines Schaltschlosses 24 geöffnet, das von einer Auslöseeinheit 26 angesteuert wird.

Bei dem Fehlerstromschutzschalter 10 ist ein Summenstromwandler eingesetzt. Hierzu sind die Primärleiter 16 und 18 abschnittsweise als Primärwicklungen 28 und 30 ausgebildet. Der Summenstromwandler umfasst eine Sekundärwicklung 32. Diese ist mit einem Ende 34 über ein Widerstandselement 36 und eine Impedanz 38 mit einem Massenanschluss 40 verbunden. Die Impedanz 38 umfasst vorliegend einen Kondensator 42 und parallel zu dem Kondensator 42 eine Reihenschaltung aus einem Kondensator 44 und einem Widerstandselement 46.

An einem Ende der Impedanz 38 befindet sich der Massenanschluss 40. Am anderen Ende der Impedanz 38 ist ein Potenzialabgriff 48 vorgesehen. Das am Potenzialabgriff 48 anliegende Potenzial wird von einer Auswerteeinrichtung 50 untersucht.

Fließt bei geschlossenen Schaltern 20 und 22 ein herkömmlicher Strom durch den Fehlerstromschutzschalter 10, hebt sich das von diesem Strom in der Primärwicklung 28 einerseits und der Primärwicklung 30 andererseits erzeugte Magnetfeld genau auf. Gibt es einen Fehlerstrom, der ein Wechselstrom ist, so heben sich diese Magnetfelder nicht mehr auf, und über das resultierende Magnetfeld wird eine Spannung in der Sekundärwicklung 32 induziert, dies ist am Potenzial 48 durch die Auswerteeinheit 50 erkennbar. Die Auswerteeinrichtung 50 veranlasst dann über einen Steuerbefehl, dass die Auslöseeinrichtung 26 das Schaltschloss 24 betätigt. Um auch solche Fehlerströme erfassen zu können, die Gleichströme sind, ist die Sekundärwicklung 32 mit einem zweiten Ende 52 mit einem Rechteckgenerator 54 gekoppelt, wobei ein Zwischenelement 56 wie z. B. ein kapazitives Element zwischen dem zweiten Ende 52 der Sekundärwicklung 32 und dem Rechteckgenerator 54 vorgesehen sein kann. Der Rechteckgenerator 54 gibt rechteckige Spannungspulse mit einer Frequenz von 3 kHz ab. Diese Frequenz ist um so viel höher als die Frequenz von 50 oder 60 Hz des Netzes, an welches der Fehlerstromschutzschalter 10 angeschlossen wird, dass Wirkungen der Rechteckpulse am Potenzialabgriff 48 ohne Beeinflussung durch Netzströme für die Auswerteeinrichtung 50 ersichtlich sind. Insbesondere induzieren die Rechteckpulse in der Sekundärwicklung 32 eine Spannung. Diese ist von der Induktivität der Sekundärwicklung 32 abhängig. Fließt nun ein Fehlerstrom, der ein Gleichstrom ist, erzeugt dieser ein Magnetfeld, das über einen in der FIG nicht gezeigten Magnetkern des Summenstromwandlers eine Änderung der Induktivität der Sekundärwicklung 32 bewirkt. Diese Änderung der Induktivität schlägt sich in einer Änderung der durch die Rechteckpulse induzierten Spannung wieder, und dies ist durch die Auswerteeinrichtung 50 erkennbar.

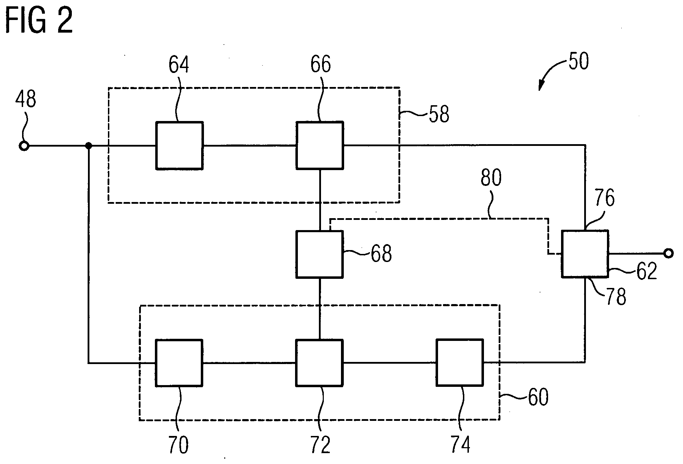

Nachfolgend wird anhand von FIG 2 erläutert, wie durch die Auswerteeinrichtung 50 die am Potenzialabgriff 48 anliegenden Signale (beschreibbar als zeitlicher Verlauf einer gegenüber Masse anliegenden Spannung) so analysiert werden können, dass sowohl Fehlerströme, die Gleichströme sind, als auch Fehlerströme, die Wechselströme sind, erfasst werden.

Die Auswerteeinrichtung 50 umfasst zwei verschiedene Äste oder Zweige, nämlich einen ersten Auswerteast 58, der die Erfassung von Wechselfehlerströmen vorbereitet, und einen zweiten Auswerteast 60, der die Erfassung von Gleichfehlerströmen oder gepulsten Fehlerströmen vorbereitet. Vorliegend sind die Auswerteäste 58 und 60 in einer gemeinsamen Auswerteeinheit 62 wieder zusammengeführt, die mit der Auslöseeinrichtung 26 gekoppelt ist.

Der erste Auslöseast 58 weist einen Bandpassfilter 64 auf. Die Mittenfrequenz des Bandpassfilters ist gleich der Netzfrequenz im Netz, an das der Fehlerstromschutzschalter 10 angeschlossen werden soll, also in Europa gleich 50 Hz und in USA gleich 60 Hz. Dem Bandpassfilter zur Auswerteeinheit 62 hin nachgeordnet ist eine Gleichrichtereinheit 66, die vom Bandpassfilter 64 zu ihm gelangende Signale gleichzeitig gleichrichtet und verstärkt. Der Verstärkungsfaktor kann über eine Einstelleinheit 68 eingestellt werden. Beispielsweise kann die Einstelleinheit einen mechanisch wirkenden Schalter umfassen, wobei beim Versetzen des Schalters in unterschiedliche Stellungen jeweils unterschiedliche Widerstandselemente in einen Schaltkreis der Gleichrichtereinheit 66 geschaltet werden, so dass sich der Verstärkungsfaktor ändert.

Der zweite Auswerteast 60 umfasst einen Hochpassfilter 70. Der Hochpassfilter 70 lässt insbesondere die Frequenz, mit der der Rechteckgenerator 54 Rechteckpulse abgibt, durch, vorliegend 3 kHz. Um einen Durchlass einer solchen Frequenz zu ermöglichen, liegt die Grenzfrequenz des Hochpassfilters typischerweise bei höchstens 71 % der durchzulassenden Frequenz. Dem Hochpassfilter 70 nachgeordnet ist eine Gleichrichtereinheit 72, die die vom Hochpassfilter 70 durchgelassenen Signale gleichzeitig gleichrichtet und verstärkt. Die Einstelleinheit 68 ist auch mit diesem Gleichrichter 72 gekoppelt, und über sie ist auch der Verstärkungsfaktor bei der Verstärkung des gleichzeitig gleichgerichteten Signals einstellbar. Der Gleichrichtereinheit 72 ist im Signalpfad zur Auswerteeinheit 62 hin nachgeordnet ein Tiefpassfilter 74, dessen Grenzfrequenz unterhalb der oben genannten Netzfrequenz liegt, so dass Signale mit dieser Netzfrequenz nicht durchgelassen werden und auch die Signale vom Rechteckgenerator, der ja eine höhere Frequenz als die Netzfrequenz abgibt, nicht durchgelassen werden.

An der Auswerteeinheit 62 kommen nun an Eingängen 76 und 78 Signale von den beiden Auswerteästen 58 und 60 an.

Die am Eingang 76 ankommenden Signale sind so aufbereitet, dass insbesondere Fehlerströme, die ein Wechselfehlerstrom sind, erkannt werden. Der zeitliche Verlauf der Signale ist dergestalt, dass eine Amplitude in den Spannungssignalen erkennbar ist. Ist die Auswerteeinheit 62 ein Mikroprozessor, bewegen sich die Signale in einem vorbestimmten Spannungsbereich. Es kann vorgesehen sein, dass die Auswerteeinheit 62 untersucht, ob die Amplitude eine vorbestimmte Spannung überschreitet. Hierbei wird dann davon ausgegangen, dass durch geeignete Wahl des Verstärkungsfaktors des Gleichrichters 66 durch die Einstelleinheit 68 ein Schwellwert der Amplitude genau dann überschritten wird, wenn der Wechselfehlerstrom eine Größenordnung einer Stromstärke erreicht, bei der der Fehlerstromschutzschalter 10 auslösen soll. Beim Überschreiten des Schwellwerts sendet dann die Auswerteeinheit 62 ein entsprechendes Signal an die Auslöseeinrichtung 26. Es kann alternativ hierzu vorgesehen sein, dass die Einstelleinheit 68 über eine Verbindungsleitung 80 der Auswerteeinheit 62 den Verstärkungsfaktor mitteilt, so dass die Auswerteeinheit 62 unmittelbar auf die Amplitude des Fehlerstroms zurückrechnen kann und dann ein entsprechendes Kriterium anlegen kann.

Genauso liegen am Eingang 78 der Auswerteeinheit 62 Signale an, anhand derer die Amplitude eines Fehlerstroms erkannt werden kann, der ein Gleichstrom ist. Üblicherweise liegt eine mehr oder weniger konstante Spannung an. Auch hier kann vorgesehen sein, dass die Auswerteeinheit 62 die Auslöseeinrichtung 26 zum Auslösen veranlasst, wenn die konstante Spannung einen vorbestimmten Schwellwert überschreitet. Durch entsprechende Information über eine Leitung 80 kann alternativ auch auf die Amplitude des Fehlerstroms zurückgeschlossen werden und ein vorbestimmtes Kriterium an die so ermittelte Amplitude anknüpfen.

Es ist zur Verwirklichung der Erfindung nicht notwendig, aber vorteilhaft, dass die Auswerteeinheit 62 Signale von den beiden Auslöseästen 58 und 60 auswertet. Statt einer Auslöseeinheit 62 könnte für jeden Auswerteast 58 und 60 auch eine jeweils eigene Auslöseeinheit vorgesehen sein.

Bei der Ausführungsform gemäß FIG 2 dient ein und dieselbe Einstelleinheit 68 zur Einstellung des Verstärkungsfaktors der Gleichrichtereinheit 66 und zur Einstellung des Verstärkungsfaktors der Gleichrichtereinheit 72. Es ist auch möglich, zwei gesonderte Einstelleinheiten vorzusehen oder an einer Einstelleinheit zwei gesonderte Einstellmöglichkeiten für die Verstärkungsfaktoren vorzusehen. Die Kopplung der Einstellung der Verstärkungsfaktoren hat jedoch den Vorteil, dass die Amplituden von Fehlerströmen, ab denen ausgelöst wird, stets das gleiche Verhältnis haben, z. B. stets als gleich vorgegeben sind.

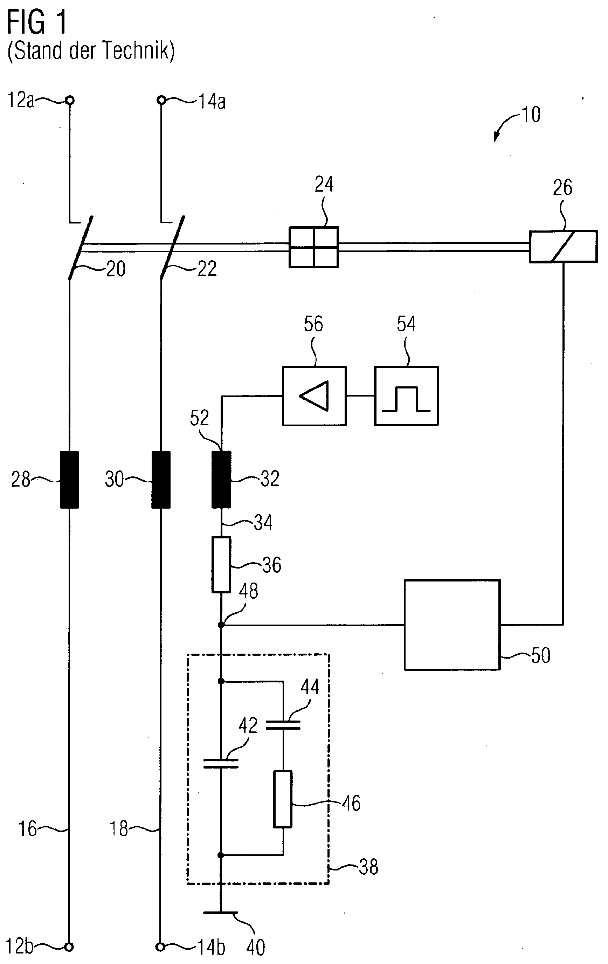

Der Fehlerstromschutzschalter 10 ist vorliegend zum Einsatz in einem einphasigen System ausgelegt und weist daher zwei Anschlusspaare (12a, 12b; 14a, 14b) und Primärleiter (16, 18) auf. Die Erfindung ist auch bei einem Fehlerstromschutzschalter einsetzbar, der an ein dreiphasiges Netz anschließbar ist. Ein solcher weist entsprechend vier Anschlusspaare und vier Primärleiter mit Primärwicklungen in einem gemeinsamen Summenstromwandler auf. Sekundärseitig muss sich ein solcher Fehlerstromschutzschalter von dem Fehlerstromschutzschalter 10 aus FIG 1 nicht unterscheiden.

### Bezugszeichenliste

- 10: Fehlerstromschutzschalter
- 12a, 12b; 14a, 14b: Anschlusspaare
- 16, 18: Primärleiter
- 20, 22, 24: Schalter
- 26: Auslöseeinheit
- 28, 30: Primärleiter
- 32: Sekundärwicklung
- 34, 52: Enden der Sekundärwicklung 32
- 36, 46: Widerstandselement
- 38: Impedanz
- 40: Massenanschluss
- 42, 44: Kondensatoren
- 48: Potenzialabgriff
- 50: Auswerteeinrichtung
- 54: Rechteckgenerator
- 58, 60: Auswerteäste
- 62: Auswerteeinheit
- 64: Bandpassfilter
- 66, 72: Gleichrichtereinheiten
- 68: Einstelleinheit
- 70: Hochpassfilter
- 74: Tiefpassfilter
- 76, 78: Eingänge
- 80: Verbindungsleitung

## Patentansprüche

1. Fehlerstromerfassungsgerät (10) mit einer Mehrzahl von Paaren von Anschlüssen (12a, 12b; 14a, 14b) für Netzleitungen, wobei die Anschlüsse (12a, 12b; 14a, 14b) eines Paares jeweils über einen Primärleiter (16, 18) miteinander verbunden sind, der eine Primärseite eines Summenstromwandlers durchläuft, wobei an einer Sekundärseite des Summenstromwandlers eine Sekundärwicklung (32) bereitgestellt ist, die mit einem ersten Ende (34) über eine Impedanz (38) mit einem Massenanschluss (40) gekoppelt ist und mit einem zweiten Ende (52) mit einem Rechteckgenerator (54) gekoppelt ist, wobei an dem nicht-massenanschlussseitigen Ende der Impedanz (38) ein Potenzialabgriff (48) bereitgestellt ist, der mit einer Auswerteeinrichtung (50) gekoppelt ist,
**gekennzeichnet durch**
einen ersten mit dem Potenzialabgriff (48) gekoppelten Auswerteast (58), der zum Aufbereiten von am Potenzialabgriff (48) anliegenden Signalen für eine Wechselfehlerstromanalyse dient und einen zweiten mit dem Potenzialabgriff (48) gekoppelten Auswerteast (60), der zum Aufbereiten von am Potenzialabgriff anliegenden Signalen für eine Gleichfehlerstromanalyse dient, wobei in jedem Ast (58, 60) ein Verstärker (66, 72) bereitgestellt ist, dessen Verstärkungsfaktor einstellbar ist.

2. Fehlerstromerfassungsgerät (10) nach Anspruch 1,
**dadurch gekennzeichnet, dass**
der Verstärker Teil einer Gleichrichtereinheit (66, 72) ist.

3. Fehlerstromerfassungsgerät (10) nach Anspruch 1,
**dadurch gekennzeichnet, dass** der erste und der zweite Auswerteast (58, 60) in einer gemeinsamen Auswerteeinheit (62) zusammengeführt sind, die zum Auswerten der durch die jeweiligen Äste (58, 60) bereitgestellten aufbereiteten Signale dient.

4. Fehlerstromerfassungsgerät (10) nach einem der Ansprüche 1 bis 3,
**dadurch gekennzeichnet, dass**
der erste Auswerteast (58) einen Bandpassfilter (64), der Signale um eine vorbestimmte Netzfrequenz durchlässt, und einen dem Bandpassfilter (64) nachgeordneten Gleichrichter und Verstärker (66) aufweist, dessen Verstärkungsfaktor einstellbar ist.

5. Fehlerstromerfassungsgerät (10) nach einem der Ansprüche 1 bis 4,
**dadurch gekennzeichnet, dass**
der zweite Auswerteast (60) einen Hochpassfilter (70) umfasst, der Signale mit einer Frequenz, die einer von dem Rechteckgenerator (54) erzeugbaren Frequenz gleich ist, durchlässt, dass dem Hochpassfilter (70) ein Gleichrichter und Verstärker (72) nachgeordnet ist, dessen Verstärkungsfaktor einstellbar ist, und dass dem Gleichrichter und Verstärker (72) ein Tiefpass (74) nachgeordnet ist, der Signale mit einer vorbestimmten Netzfrequenz herausfiltert.

6. Fehlerstromerfassungsgerät (10) nach einem der Ansprüche 1 bis 5,
**gekennzeichnet durch**
ein Bedienelement (68) über das der Verstärkungsfaktor der Verstärker (66, 72) in beiden Ästen (58, 60) einstellbar ist.

7. Fehlerstromerfassungsgerät (10) nach einem der vorhergehenden Ansprüchen, welches ein Fehlerstromschutzschalter (10) ist, von dem zumindest ein Primärleiter (16, 18) durch einen Schalter (20, 22) unterbrechbar ist, und wobei die Auswerteeinrichtung (50) am Potenzialabgriff (48) anliegende Signale zu analysieren und bei einem vorbestimmten Analyseergebnis ein Unterbrechen jedes Schalters (20, 22) in einem Primärleiter (16, 18) zu bewirken ausgelegt ist.

## Claims

1. Fault-current detection device (10) having a plurality of pairs of connections (12a, 12b; 14a, 14b) for mains cables, wherein the connections (12a, 12b; 14a, 14b) of a pair are each connected to one another via a primary conductor (16, 18) that passes through a primary side of a summation current transformer, wherein a secondary side of the summation current transformer is provided with a secondary winding (32) that has a first end (34) coupled to an earth connection (40) via an impedance (38) and has a second end (52) coupled to a square-wave generator (54), wherein that end of the impedance (38) that is not on the earth connection side is provided with a potential tap (48) that is coupled to an evaluation device (50),
**characterized by**
a first evaluation branch (58), which is coupled to the potential tap (48) and which is used to condition signals applied to the potential tap (48) for AC fault-current analysis, and a second evaluation branch (60), which is coupled to the potential tap (48) and which is used for conditioning signals applied to the potential tap for DC fault-current analysis, each branch (58, 60) being provided with an amplifier (66, 72) whose gain factor is adjustable.

2. Fault-current detection device (10) according to Claim 1,
**characterized in that**
the amplifier is part of a rectifier unit (66, 72).

3. Fault-current detection device (10) according to Claim 1,
**characterized in that** the first and second evaluation branches (58, 60) are combined in a common evaluation unit (62) that is used to evaluate the conditioned signals provided by the respective branches (58, 60).

4. Fault-current detection device (10) according to one of Claims 1 to 3,
**characterized in that**
the first evaluation branch (58) has a bandpass filter (64), which allows the passage of signals around a predetermined mains frequency, and a rectifier and amplifier (66), arranged downstream of the bandpass filter (64), whose gain factor is adjustable.

5. Fault-current detection device (10) according to one of Claims 1 to 4,
**characterized in that**
the second evaluation branch (60) comprises a high-pass filter (70) that allows the passage of signals at a frequency that is the same as a frequency that can be produced by the square-wave generator (54), **in that** the high-pass filter (70) has a downstream rectifier and amplifier (72) whose gain factor is adjustable, and **in that** the rectifier and amplifier (72) has a downstream low-pass filter (74) that filters out signals at a predetermined mains frequency.

6. Fault-current detection device (10) according to one of Claims 1 to 5,
**characterized by**
an operator control element (68) that can be used to adjust the gain factor of the amplifier (66, 72) in both branches (58, 60).

7. Fault-current detection device (10) according to one of the preceding claims, which is a residual-current-operated circuit-breaker (10) that can interrupt at least one primary conductor (16, 18) by means of a switch (20, 22), and wherein the evaluation device (50) is designed to analyse signals applied to the potential tap (48) and, for a predetermined analysis result, to prompt interruption by each switch (20, 22) in a primary conductor (16, 18).

## Revendications

1. Appareil de détection de courant différentiel (10) comportant une pluralité de paires de connexions (12a, 12b ; 14a, 14b) pour câbles de réseau, les connexions (12a, 12b ; 14a, 14b) d'une paire étant reliées entre elles respectivement via un conducteur primaire (16, 18) qui traverse un côté primaire d'un transformateur de courant totalisateur, un enroulement secondaire (32) étant mis à disposition du côté secondaire du transformateur de courant totalisateur, lequel enroulement est couplé à un raccordement à la masse (40) via une impédance (38) en une première extrémité (34) et à un générateur de signaux rectangulaires (54) en une deuxième extrémité (52), à l'extrémité de l'impédance (38) non située du côté du raccordement à la masse étant mise à disposition une prise de potentiel (48) qui est couplée à un dispositif d'évaluation (50), **caractérisé par** une première branche d'évaluation (58) couplée à la prise de potentiel (48) et servant à la mise en forme de signaux appliqués à la prise de potentiel (48) pour une analyse de courant différentiel alternatif et une deuxième branche d'évaluation (60) couplée à la mise en forme de signaux appliquées à la prise de potentiel pour une analyse de courant différentiel continu, un amplificateur (66, 72) dont le facteur d'amplification est réglable étant fourni dans chaque branche (58, 60).

2. Appareil de détection de courant différentiel (10) selon la revendication 1, **caractérisé en ce que** l'amplificateur fait partie d'une unité de redressement (66, 72).

3. Appareil de détection de courant différentiel (10) selon la revendication 1, **caractérisé en ce que** la première et la deuxième branche d'évaluation (58, 60) se rejoignent dans une unité d'évaluation commune (62) qui sert à évaluer les signaux mis en forme fournis par les branches respectives (58, 60).

4. Appareil de détection de courant différentiel (10) selon l'une des revendications 1 à 3, **caractérisé en ce que** la première branche d'évaluation (58) comporte un filtre passe-bande (64) qui laisse passer des signaux situés autour d'une fréquence de réseau prédéfinie et, en aval du filtre passe-bande (64), un redresseur et amplificateur (66) dont le facteur d'amplification est réglable.

5. Appareil de détection de courant différentiel (10) selon l'une des revendications 1 à 4, **caractérisé en ce que** la deuxième branche d'évaluation (60) comprend un filtre passe-haut (70) qui laisse passer des signaux avec une fréquence égale à une fréquence pouvant être générée par le générateur de signaux rectangulaires (54), **en ce qu'**est situé, en aval du filtre passe-haut (70), un redresseur et amplificateur (72) dont le facteur d'amplification est réglable et **en ce qu'**est situé, en aval du redresseur et amplificateur (72), un filtre passe-bas (74) qui filtre des signaux avec une fréquence de réseau prédéfinie.

6. Appareil de détection de courant différentiel (10) selon l'une des revendications 1 à 5, **caractérisé par** un élément de commande (68) via lequel le facteur d'amplification des amplificateurs (66, 72) peut être réglé dans les deux branches (58, 60).

7. Appareil de détection de courant différentiel (10) selon l'une des revendications précédentes, lequel est un interrupteur différentiel (10) dont au moins un conducteur primaire (16, 18) peut être coupé par un interrupteur (20, 22), et le dispositif d'évaluation (50) étant conçu pour analyser des signaux appliqués à la prise de potentiel (48) et pour provoquer une coupure de chaque interrupteur (20, 22) dans un conducteur primaire (16, 18) pour un résultat d'analyse prédéfini.
